Europäisches Patentamt

European Patent Office

Office européen des brevets

(11) Veröffentlichungsnummer: **0 017 266**
**A1**

(12) **EUROPÄISCHE PATENTANMELDUNG**

(21) Anmeldenummer: **80200154.5**

(22) Anmeldetag: **25.02.80**

(51) Int. Cl.³: **G 02 B 7/08**

(30) Priorität: **20.03.79 DE 2910820**

(43) Veröffentlichungstag der Anmeldung:
**15.10.80 Patentblatt 80/21**

(84) Benannte Vertragsstaaten:
**AT CH FR**

(71) Anmelder: **Braun Aktiengesellschaft
Rüsselsheimer Strasse 22
D-6000 Frankfurt/Main(DE)**

(72) Erfinder: **Roth, Johann
Münchner Strasse 3SS
D-8061 Schwabhausen(DE)**

(74) Vertreter: **Einsele, Rolf et al,
Braun Aktiengesellschaft Postfach 1120
D-6242 Kronberg/Taunus(DE)**

(54) **Laufbildkamera mit motorischer Verstellung der Aufnahmeoptik.**

(57) Bei einer Laufbildkamera mit motorischer Verstellung der Aufnahmeoptik durch im Stromkreis des Stellmotors liegende und diesen im Sinne einer Veränderung der Verstellgeschwindigkeit beeinflussende Stellglieder, sind die Stellglieder in Abhängigkeit von der Stellkraft und vom Stellweg ihres Betätigungsgliedes im Sinne einer Veränderung ihrer Leitfähigkeit ansprechende Schaltglieder.

Fig. 2

EP 0 017 266 A1

Laufbildkamera mit motorischer Verstellung der Aufnahmeoptik

Die Erfindung bezieht sich auf eine Laufbildkamera mit motorischer Verstellung der Aufnahmeoptik durch im Stromkreis des Stellmotors liegende und diesen im Sinne einer Veränderung der Verstellgeschwindigkeit beeinflussende Schaltglieder.

Es ist bekannt, Laufbildkameras zur motorischen Verstellung der Aufnahmeoptik mit unterschiedlichen Verstellgeschwindigkeiten - beispielsweise zum Verändern der Brennweite des Aufnahmeobjektivs - Drucktasten für beide Verstellrichtungen zuzuordnen. Diese Drucktasten sind derart in den Stromkreis des Stellmotors integriert, daß bei einem geringen Niederdrücken der jeweiligen Taste der Stellmotor mit relativ niedriger Geschwindigkeit umläuft und beim vollen Niederdrücken der betreffenden Taste dieser Motor auf eine weitaus höhere Drehzahl umgeschaltet wird. Damit wird errreicht, daß zur Veränderung der Brennweite des Aufnahmeobjektivs - je nach den szenischen Gegebenheiten - wenigstens zwei unterschiedliche Geschwindigkeiten zur Verfügung stehen, die wahlweise eingesetzt werden können.

Diese Mittel zur Veränderung der Verstellgeschwindigkeit der Aufnahmeoptik einer Laufbildkamera unterliegen einem nicht unbedeutenden Verschleiß, da die zwei Verstellgeschwindigkeiten auslösenden Schalter ständig mechanischen Beanspruchungen unterliegen, was in kürzerer oder längerer Zeit zu einem Defekt der betreffenden Bauteile der Kamera führen wird, woraus im allgemeinen eine relativ kostspielige Reparatur resultiert. Ferner ist hier infolge der Verwendung elektrischer Widerstände zur Verringerung der Verstellgeschwindigkeit in jedem Fall mit einem relativ hohen Stromverbrauch zu rechnen, was sich für Geräte mit Stromquellen relativ geringer Kapazität - also für Laufbildkameras, insbesondere Amateurkameras - äußerst nachteilig auswirkt.

Aufgabe der Erfindung ist es nun, eine andere Möglichkeit zur Veränderung der Verstellgeschwindigkeit der Aufnahmeoptik zu schaffen, die die Mängel der bekannten Verstellmittel nicht mehr aufweist und sich darüber hinaus mit relativ wenig Aufwand verwirklichen läßt. Die dem Gegenstand vorliegender Patentanmeldung zugrundeliegende Erfindung soll schließlich ein feinfühliges und exaktes Verstellen der Aufnahmeoptik mit stetig veränderbarer Geschwindigkeit gestatten.

Gelöst wird diese Aufgabe mit der die eingangs definierte motorische Verstellung der Aufnahmeoptik ermöglichenden Laufbildkamera dadurch, daß die die Veränderung der Verstellgeschwindigkeit bewirkenden Stellglieder in Abhängigkeit von der Stellkraft und vom Stellweg ihres Betätigungsglieds im Sinne einer Veränderung ihrer Leitfähigkeit ansprechende Schaltglieder sind.

Mit besonderem Vorteil ist das den Stromfluß durch den Stellmotor verändernde Schaltglied aus einem hinsichtlich seiner Leitfähigkeit magnetisch beeinflußbaren Halbleiter gebildet. Die Leitfähigkeit dieses Widerstandes verringert sich hierbei kontinuierlich bei Annäherung eines Magneten. In diesem Fall finden während des gesamten Verstellvorganges überhaupt keine mechanischen Beanspruchungen der miteinander zusammenwirkenden Stell- beziehungsweise Schaltglieder statt, so daß hier ein Materialverschleiß vollständig ausgeschlossen ist.

Mit gleichem funktionellen Erfolg kann das den Stromfluß durch den Stellmotor verändernde Schaltglied ein Kontaktstück aus druckabhängig leitendem, insbesondere elastischem Material sein. Hierbei findet vorzugsweise nur eine punktförmige Beanspruchung des Schaltgliedes durch sein Betätigungsglied statt, die durch die Elastizität des Kontaktstücks weitestgehend eliminiert wird. Im Gegensatz zu den bekannten, einer schlagartigen Beanspruchung ausgesetzten Schaltgliedern ist demzufolge hier nur mit einem minimalen, praktisch vernachlässigbaren Verschleiß zu rechnen.

Vorteilhaft sind in der Laufbildkamera gemäß der Erfindung je zwei den Stromfluß durch den Stellmotor verändernde Schaltglieder vorgesehen, deren wahlweises Einschalten in den Motorstromkreis die Motordrehrichtung umkehrt.

Erst durch diese Maßnahme ist ein wahlweises Verändern beispielsweise der Brennweite der Aufnahmeoptik der Kamera mit vom Kamerabenutzer jeweils gewünschter Geschwindigkeit möglich, womit eine optimale Anpassung an die optische Gestaltung der jeweiligen Filmszene ermöglicht wird.

Die Erfindung ist nachstehend anhand der Zeichnung in mehreren Ausführungsbeispielen erläutert. Es zeigen:

Fig. 1   den Aufbau einer einen magnetisch veränderbaren Widerstand umfassenden Verstelleinrichtung gemäß der Erfindung;

Fig. 2   eine mit einem auf zwei magnetisch veränderbare Widerstände einwirkenden wippenartigen Stellglied versehene Verstelleinrichtung gemäß Fig.1;

Fig. 3   den Aufbau einer Kontaktstücke aus druckabhängig leitendem Material umfassenden Verstelleinrichtung gemäß der Erfindung.

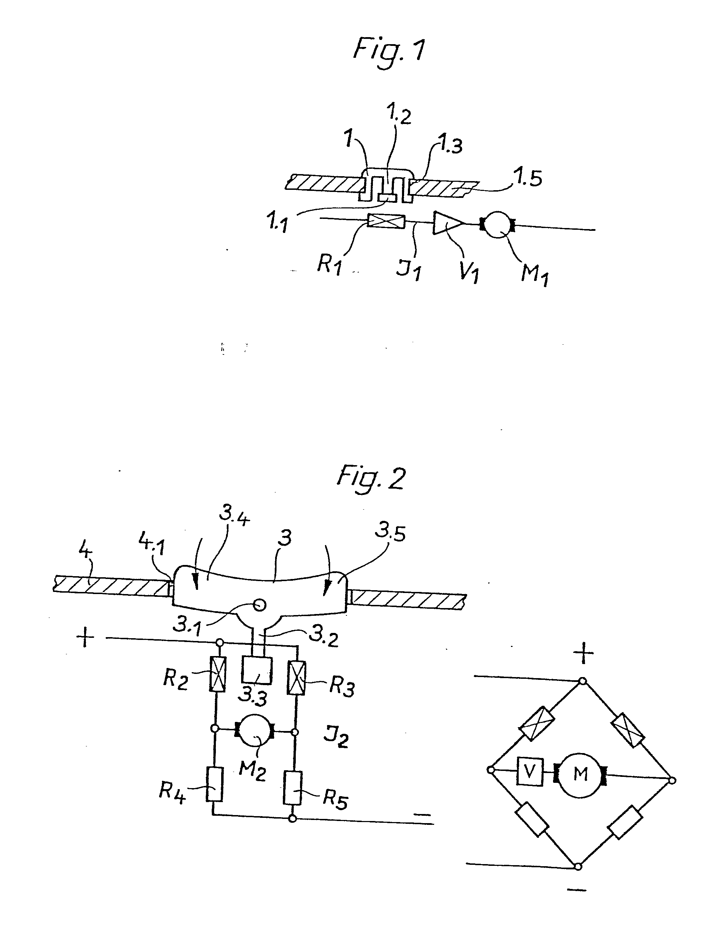

Die Fig.1 zeigt einen grundsätzlichen Schaltungsaufbau der erfindungsgemäßen Verstelleinrichtung mit magnetisch beeinflußbarem Widerstand im Motorstromkreis.

In dem dem Verstellmotor M1 für die Aufnahmeoptik der erfindungsgemäßen Laufbildkamera zugeordneten Stromzweig I1 befindet sich - in Reihe zum Motor M1 - ein steuerbares Halbleiterelement R1, dem eine Verstärkerstufe V1 nachgeschaltet werden kann. Das Halbleiterelement R1 ist ansteuerbar durch einen Permanentmagneten 1.1, der an einem steg- oder zapfenförmigen Mittelteil 1.2 einer Drucktaste 1 befestigt ist. Die Drucktaste 1 ist aus elastischem Werkstoff beispielsweise aus Weichgummi hergestellt und mittels einer ringförmigen Nut 1.3 in eine Ausnehmung der sie umgebenden Gehäusewandung 1.5 der Laufbildkamera eingelassen.

Wird der Kopf der so gebildeten Drucktaste 1 niedergedrückt, so nähert sich der an ihrem Mittelteil 1.2 angeordnete Permanentmagnet 1.1 dem Halbleiterelement R1, wodurch dessen Leitfähigkeit kontinuierlich ansteigt, so daß dem Verstellmotor M1 entsprechend mehr Betriebsstrom zugeführt wird. Dessen Drehzahl wird infolgedessen stetig erhöht, womit die Verstellgeschwindigkeit der mit dem Motor M1 getrieblich verbundenen, die Brennweite verändernden Stellglieder der Aufnahmeoptik der Laufbildkamera stetig vergrößert wird.

Beim allmählichen Freigeben der Drucktaste 1 folgt diese unter dem Druck ihrer elastischen Seitenwandungen dem zurückweichenden Finger des Kamerabenutzers nach, wodurch sich der Permanentmagnet 1.1 von dem Halbleiterelement R1 allmählich entfernt, was ein kontinuierliches Verringern der Leitfähigkeit des Elements R1 zur Folge hat. Daraus resultiert eine stetige Abnahme der der Aufnahmeoptik zugeführten Verstellgeschwindigkeit. Die Verringerung der Brennweite der Aufnahmeoptik der Laufbildkamera geschieht hierbei kontinuierlich bis zur vollständigen Freigabe der Drucktaste 1, wodurch das die Brennweitenänderung bewirkende Stellglied der Aufnahmeoptik der Kamera endgültig stillgesetzt wird.

Die erfindungsgemäße Verstelleinrichtung gewährleistet ein exaktes Verändern der Brennweite der Aufnahmeoptik, da infolge der Möglichkeit des Variierens der Verstellgeschwindigkeit durch Verändern des Tastendruckes das brennweitenändernde Stellglied der Aufnahmeoptik mit stark verzögerter Geschwindigkeit auf die jeweils gewünschte Brennweite zulaufen und sodann bei Erreichen dieser Brennweite durch Freigabe der Taste exakt gestoppt werden kann.

Ebenso ist es mit der erfindungsgemäßen Laufbildkamera möglich, durch Verändern des Tastendruckes die Verstellgeschwindigkeit den szenischen Erfordernissen genau anzupassen, da der Kamerabenutzer auch während der Aufnahme die Verstellgeschwindigkeit der Brennweite der Aufnahmeoptik kontinuierlich verändern kann. Er kann dabei die Brennweitenänderung im Sucher der Kamera beobachten und diese dem szenischen Geschehen - beispielsweise eine optische Verfolgung eines sich beschleunigt entfernenden Gegenstandes (Fahrzeug) - in optimaler Weise anpassen.

Die Fig.2 zeigt den Aufbau einer im Prinzip dem vorstehend erläuterten Ausführungsbeispiel entsprechenden Verstelleinrichtung, die jedoch hier die Veränderung der Brennweite der Aufnahmeoptik in zwei gegensätzlichen Stellrichtungen erlaubt.

Diese Verstelleinrichtung umfaßt eine wippenartig ausgebildete Verstellhandhabe 3, die um eine gerätefeste Achse 3.1 in an sich bekannter Weise
begrenzt schwenkbar gelagert ist. Diese Handhabe 3 durchdringt eine Ausnehmung 4.1 des Kameragehäuses 4, so daß diese Handhabe ohne Behinderung
von außen zu betätigen ist.

Die in ihrer Mittelstellung durch Speicherkraft gehaltene Handhabe 3 enthält nun an einem rechtwinklig zu ihrer Längserstreckung angeordneten Ansatz 3.2 einen Permanentmagneten 3.3, der sich in Ruhestellung genau
zwischen den magnetisch beeinflußbaren Halbleitern R2 und R3 befindet.

Wird die Handhabe 3 durch Niederdrücken ihres (in Fig.2) linken Arms 3.4
geschwenkt, so nähert sich der Permanentmagnet 3.3 mit entsprechender
Geschwindigkeit dem (in Fig.2) rechten Halbleiter R3, dessen Leitfähigkeit dabei ständig zunimmt. Der Verstellmotor M2 wird dabei stärker mit
Betriebsstrom versorgt, wobei die Verstellgeschwindigkeit des mit dem
Motor M2 getrieblich verbundenen brennweitenverändernden Stellglied der
Aufnahmeoptik (nicht dargestellt) ansteigt. Die Brennweite der Aufnahmeoptik wird hierbei stetig verringert.

Wird der (in Fig.2) rechte Arm 3.5 niedergedrückt, so nähert sich der
Permanentmagnet 3.3 dem Halbleiter R2, wobei der Verstellmotor in umgekehrter Richtung umläuft, und mit sich stetig vermehrendem Betriebsstrom
versorgt wird. Folglich wird hierbei eine Vergrößerung der Brennweite
durch das mit dem Motor M2 getrieblich verbundenen Stellglied der Aufnahmeoptik bewirkt.

Der Verstellmotor M2 ist hier Bestandteil einer Brückenschaltung I2 mit
den Widerständen R4 und R5 die gemeinsam mit den Halbleitern R2 und R3
so zueinander abgestimmt sind, daß der Verstellmotor in der Mittelstellung
der Verstellhandhabe 3 zum Stillstand kommt.

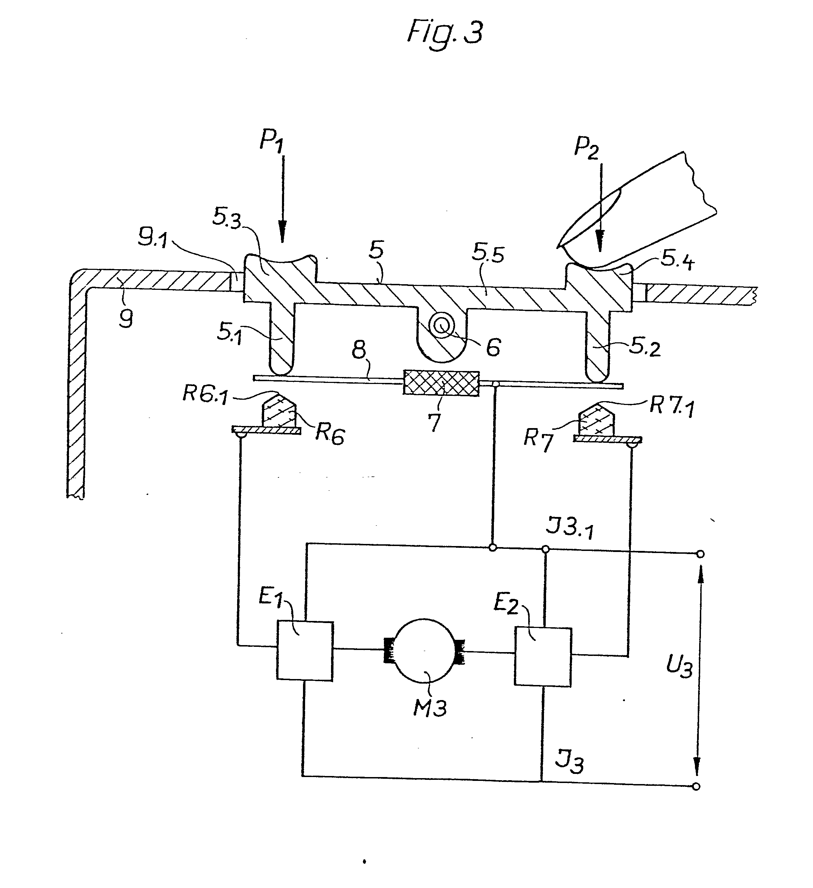

Ein weiteres Ausführungsbeispiel des Gegenstandes der Erfindung zeigt in
schematischer Darstellung die Fig.3. Sie offenbart eine Verstelleinrichtung, deren Verstellmotor M3 von zwei Halbleitern R6 und R7 aus druckabhängig leitendem Material beeinfluß wird. Diese Halbleiter R6 und R7
besitzen hier je eine kegelförmige Spitze R6.1 und R7.1, die durch Zusammendrücken mittels eines geeigneten Druckkörpers deformierbar sind. Als
Druckkörper kann hier die Unterseite einer Drucktaste oder auch einer
Stellwippe 5 dienen, die bei 6 gerätefest gelagert ist.

Die Stellwippe 5 ist gemäß Fig.3 noch mit zwei bolzenförmigen Vorsprüngen 5.1 und 5.2 versehen, die über eine bei 7 gerätefest gehaltene, im Steuerzweig des dem Stellmotor M3 zugeordneten Stromkreises I3 liegende doppelarmige Kontaktfeder 8 alternativ auf die beiden Halbleiter R6 und R7 einwirken, und zwar in der Weise, daß dessen elektrische Leitfähigkeit in Abhängigkeit von dem auf sie jeweils einwirkenden Druck ansteigt. In Abhängigkeit davon wird die Drehzahl des Verstellmotors M3 infolge stärkeren Stromzuflusses erhöht und demzufolge die Brennweitenverstellgeschwindigkeit der Aufnahmeoptik der Laufbildkamera vergrößert.

Wie die Zeichnung erkennen läßt, ist die Stellwippe 5 mit zwei nach außen vorspringenden Taststücken 5.3 und 5.4 versehen, deren Mulden das Niederdrücken der Wippe 5 erleichtern sollen. Die Stellwippe 5 ist unter Einwirkung einer nicht dargestellten Speicherkraft - beispielsweise allein schon durch die Kontaktfeder 8 - nach dem Stellvorgang in ihre Ausgangsstellung überführbar. Sie ist in einer sie unmittelbar umgebenden Ausnehmung 9.1 des Kameragehäuses 9 angeordnet, vorzugsweise derart, daß der Wippenkörper 5.5 nicht über die Gehäusewandung 9 hinausragt.

Der Stromkreis I3 des Stellmotors M3 ist gemäß Fig.3 an eine Gleichspannung U3 gelegt, und zwar nicht unmittelbar, sondern über je eine mit den Motorpolen direkt verbundene Steuerelektronik E1 beziehungsweise E2 deren Steuerstromzweig I3.1 auch die Halbleiter R6 und R7 umfaßt. Die jeweilige Steuerelektronik E1 beziehungsweise E2 wird nun von den zugehörigen Halbleitern R6 und R7 jeweils im Sinne einer stetigen Vergrößerung des Stromflusses zum Verstellmotor M3 in Abhängigkeit von dem jeweils auf die elektrischen Kontaktstücke R6 beziehungsweise R7 ausgeübten Druck beeinflußt, beispielsweise derart, daß sich unter dem sich vergrößernden Druck auf die Taste 5.3 die Verstellgeschwindigkeit des mit dem Motor M3 getrieblich verbundenen brennweitenverändernden Stellglieds der kameraseitigen Aufnahmeoptik im Sinne der Vergrößerung der Brennweite und bei sich vergrößerndem Druck auf die Taste 5.4 dieses Stellglied im Sinne einer Verringerung der Brennweite bewegt.

Es liegt im Rahmen der Erfindung, auch eine Lichtschranke als Steuerglied für den die Aufnahmeoptik der Kamera beeinflussenden Stellmotor vorzusehen. Die allmähliche Verringerung des Querschnitts des Strahlenbündels der Lichtschranke durch das ihr zugehörige Abdeckglied kann hier zur Beschränkung oder zur Vergrößerung des Stromzuflusses zum Stellmotor der Kamera herangezogen werden.

Alle diese vorstehend erläuterten Verstelleinrichtungen unterliegen keinem nennenswerten Verschleiß, da ihre stromsteuernden Glieder mechanischen Beanspruchungen nicht oder nur in vernachlässigbarem Ausmaß ausgesetzt sind. Sie gewährleisten deshalb ohne Ausnahme ein leichtes und feinfühliges Verändern der Verstellgeschwindigkeit der Aufnahmeoptik der erfindungsgemäßen Kamera.

Die erfindungsgemäße Verstelleinrichtung kann ohne weiteres auch zum motorischen Verändern anderer das feinfühlige Annähern bis zu einem Sollwert erfordernder Funktionseinheiten der Kamera - beispielsweise zur Blendenverstellung - mit Erfolg eingesetzt werden.

Patentansprüche

1. Laufbildkamera mit motorischer Verstellung der Aufnahmeoptik durch im Stromkreis des Stellmotors liegende und diesen im Sinne einer Veränderung der Verstellgeschwindigkeit beeinflussende Stellglieder, dadurch gekennzeichnet, daß die Stellglieder in Abhängigkeit von der Stellkraft und vom Stellweg ihres Betätigungsgliedes im Sinne einer Veränderung ihrer Leitfähigkeit ansprechende Schaltglieder sind.

2. Laufbildkamera nach Anspruch 1, dadurch gekennzeichnet, daß das den Stromfluß durch den Stellmotor verändernde Schaltglied aus einem hinsichtlich seiner Leitfähigkeit magnetisch beeinflußbaren Halbleiter (R1, R2, R3) gebildet ist.

3. Laufbildkamera nach Anspruch 1, dadurch gekennzeichnet, daß das den Stromfluß durch den Stellmotor verändernde Schaltglied ein Kontaktstück (R6, R7) aus druckabhängig leitendem insbesondere elastischem Material ist.

4. Laufbildkamera nach wenigstens einem der Ansprüche 1 bis 3, dadurch gekennzeichnet, daß in der Kamera je zwei den Stromfluß durch den Stellmotor (M2, M3) verändernde Schaltglieder (R2, R3; R6, R7) vorgesehen sind, deren wahlweise Einschaltung in den Motorstromkreis die Motordrehrichtung umkehrt.

5. Laufbildkamera nach Anspruch 2 oder 4, dadurch gekennzeichnet, daß das hinsichtlich seiner Leitfähigkeit magnetisch beeinflußbare Schaltglied (R1, R2, R3) durch kontinuierliches Annähern oder Entfernen eines Permanentmagneten (1.1, 3.3) im Sinne einer Änderung seiner elektrischen Leitfähigkeit zu steuern ist.

6. Laufbildkamera nach Anspruch 5, dadurch gekennzeichnet, daß der mit dem Schaltglied (R2, R3) zusammenwirkende Permanentmagnet (3.3) Teil einer Schaltwippe (3) ist, die aus einer Mittelstellung in zwei das kontinuierliche Ansteigen der Drehzahl des Stellmotors (M2) wahlweise in zwei entgegengesetzte Drehrichtungen bewirkende Stellbereiche kippbar ist.

7. Laufbildkamera nach Anspruch 1 und 3, dadurch gekennzeichnet, daß das aus elastischem, druckabhängig leitendem Material bestehende Kontaktstück (R6, R7) durch ein es kontinuierlich zusammenpressendes beziehungsweise freigebendes Druckstück (5.1, 5.2) im Sinne einer Änderung seiner elektrischen Leitfähigkeit zu beeinflussen ist.

8. Laufbildkamera nach Anspruch 7, dadurch gekennzeichnet, daß das mit dem Kontaktstück (R6, R7) zusammenwirkende Druckstück (5.1, 5.2) Teil einer Schaltwippe (5) ist, die aus einer Mittelstellung in zwei das kontinuierliche Ansteigen der Drehzahl des Stellmotors wahlweise in zwei entgegengesetzte Drehrichtungen bewirkende Stellbereiche kippbar ist.

9. Laufbildkamera nach Anspruch 7 oder 8, dadurch gekennzeichnet, daß das Kontaktstück (R6, R7) oder das mit ihm zusammenwirkende Druckstück (5.1, 5.2) kegelförmig ausgebildet ist.

10. Laufbildkamera nach wenigstens einem der Ansprüche 1 bis 9, dadurch gekennzeichnet, daß der Stellmotor (M2, M3) Mittelteil einer elektrischen Brücke (12, 13) ist, die durch die hinsichtlich ihrer elektrischen Leitfähigkeit veränderlichen Schaltglieder (R2, R3; R6, R7) abgleichbar ist.

Fig. 1

Fig. 2

Braun AG

Fig. 3

Braun AG

Europäisches Patentamt

**EUROPÄISCHER RECHERCHENBERICHT**

Nummer der Anmeldung

EP 80 20 0154

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 602 789 (LEISTNER) <br> * Anspruch 1 * <br><br> -- | 1,4,6, 8 |
| | FR - A - 1 459 104 (RETALI) <br> * Seite 5, linke Spalte, Zeile 50 - Seite 6, linke Spalte, Zeile 31 * <br><br> -- | 1,4,6, 8 |
| | DE - C - 609 016 (SIEMENS-SCHUCKERTWERKE) <br> * Anspruch 1 * <br><br> -- | 3,7,10 |
| | DE - C - 816 421 (SIEVERS) <br> * Anspruch 1 * <br><br> -- | 3,7 |
| | GB - A - 1 191 261 (COVENTRY CLI-MAX ENGINES) <br> * Anspruch 1 * <br><br> -- | 2,5 |
| | US - A - 3 818 292 (BERMAN) <br> * Anspruch 1 * <br><br> -- | 2,5 |
| A | US - A - 3 517 597 (RAUFFER) <br> * Insgesamt * <br><br> -- | 1 |
| A | DE - B - 1 245 722 (LEITZ) <br> * Insgesamt * <br><br> -- / · | 1 |

Der vorliegende Recherchenbericht wurde für alle Patentansprüche erstellt.

### KLASSIFIKATION DER ANMELDUNG (Int.Cl.³)

G 02 B 7/08

### RECHERCHIERTE SACHGEBIETE (Int. Cl.³)

G 02 B 7/08
7/04
7/11
H 02 P 1/22
7/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| Recherchenort | Abschlußdatum der Recherche | Prüfer |
|---|---|---|
| Den Haag | 17-06-1980 | MEES |

EPA form 1503.1 06.78

Europäisches
Patentamt

**EUROPÄISCHER RECHERCHENBERICHT**

| | **EINSCHLÄGIGE DOKUMENTE** | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| A | <u>FR - A - 1 295 845</u> (AGFA)<br><br>* Insgesamt *<br><br>---- | 1 | |

RECHERCHIERTE SACHGEBIETE (Int. Cl. ³)